# Europäisches Patentamt

# European Patent Office

# Office européen des brevets

(11) Numéro de publication: **0 202 966**

**B1**

---

(12) **FASCICULE DE BREVET EUROPÉEN**

---

(45) Date de publication du fascicule du brevet:
**12.10.88**

(21) Numéro de dépôt: **86400757.0**

(22) Date de dépôt: **09.04.86**

(51) Int. Cl.⁴: **C 08 L 95/00,** E 01 C 7/26,
E 01 C 11/00, E 01 C 11/10,
E 01 D 19/08

---

(54) Composition pour revêtement, à base de bitume et de poudre de caoutchouc de récupération.

---

(30) Priorité: **22.04.85 FR 8506031**

(43) Date de publication de la demande:
**26.11.86 Bulletin 86/48**

(45) Mention de la délivrance du brevet:
**12.10.88 Bulletin 88/41**

(84) Etats contractants désignés:
**AT BE CH DE GB IT LI LU NL SE**

(56) Documents cité:
**FR-A-1 557 193**
**FR-A-2 512 827**
**US-A-3 540 906**
**US-A-3 844 668**
**US-A-4 068 023**

**Le dossier contient des informations techniques présentées postérieurement au dépôt de la demande et ne figurant pas dans le présent fascicule.**

(73) Titulaire: **BEUGNET, Société anonyme dite, 53 Boulevard Faidherbe BP 966, F-62033 Arras Cédex (Pas de Calais) (FR)**

(72) Inventeur: **Saiton, Alain, Fontenette Abbeville- la-Rivière, F-91150 Etampes (FR)**

(74) Mandataire: **Cuer, André, CABINET CUER 30, rue de Léningrad, F-75008 Paris (FR)**

---

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

## 0 202 966

**Description**

La présente invention a trait au domaine des compositions à base de bitumes, asphaltes, goudrons ou analogues, modifiées par adjonction de produits caoutchouteux, en vue de réaliser des revêtements de sols, des couches d'étanchéité pour ouvrages d'art, des joints de chaussées, produits de colmatage de fissures, etc. Elle concerne plus spécialement la modification de liants à base bitume et de déchets de caoutchouc issu de pneumatiques usagés, dans le but d'améliorer notamment les propriétés rhéologiques.

Il est connu depuis longtemps d'incorporer aux bitumes, afin d'améliorer leurs propriétés mécaniques ainsi que la relation viscosité-température, divers adjuvants dont notamment des élastomères synthétiques des types polymères et copolymères à insaturation éthylénique (voir par exemple brevet français N° 1 557 193).

Par ailleurs, on a déjà préconisé de modifier les bitumes en leur incorporant, par mélange à chaud, des débris ou déchets de caoutchouc, par exemple provenant de pneumatiques usagés. L'opération de mélange s'effectue préférentiellement en présence d'un agent de fluidification ou compatibilisation constitué par une huile de type coupe pétrolière d'intervalle de distillation généralement compris entre 150 et 250°C (voir par exemple les brevets US N°3 844 668, 4 068 023...).

Il a ensuite été établi que le type de mélange précité permettait d'obtenir des liants à caractéristiques améliorés en opérant avec des quantités bien déterminées des différents constituants et en sélectionnant l'origine des caoutchoucs de récupération, par exemple en mettant en oeuvre des poudrettes de pneus usagés issus à la fois de camions et de voitures légères (demande de brevet français N°8 117 526 publiée sous le N° 2 512 827).

Il a maintenant été trouvé que l'on pouvait encore accroître notamment les caractéristiques rhéologiques et élargir ainsi la gamme d'utilisation des liants objets de la demande française précitée grâce à l'introduction d'une petite quantité d'élastomère synthétique et à la mise au point de compositions bien définies constituées par la combinaison, pour 100 parties en poids de produit final, de:

a) 10 à 40 parties de ladite poudre de caoutchouc comprenant elle-même, pour 100 parties (poids): 20 à 80 parties de déchets broyés de pneumatiques de poids lourds et 80 à 20 parties de déchets broyés de pneumatiques de voiture de tourisme et/ou cyclomoteurs;

b) 0,5 à 3 parties d'un élastomère synthétique à insaturation oléfinique compatible avec le bitume décrit ci-dessous ;

c) 3 à 15 parties dudit adjuvant constitué par une coupe pétrolière naphténo-aromatique renfermant plus de 50 % de composés aromatiques, de point éclair supérieur à 200°C et de viscosité cinématique à 40°C supérieure à 500 centistokes ;

d) Le complément à 100 parties de bitume classique, non traité, de distillation directe, d'indice de pénétration compris entre 60 et 150.

On sait que les pneus de poids lourds (PL) renferment essentiellement, en dehors des charges et additifs divers, du caoutchouc naturel constitué principalement de polyisoprène alors que les pneus de véhicules légers (VL) renferment surtout du caoutchouc synthétique type polybutadiène. En utilisant une poudrette de caoutchouc obtenue par broyage ou rapage des deux types de pneus usagés, on peut allier les qualités essentielles du caoutchouc naturel (résistance à la rupture, bonne adhérence en mélange avec les bitumes) à celles du caoutchouc synthétique, notamment une tenue remarquable à basse température.

Dans les compositions selon l'invention, les déchets broyés peuvent provenir pour 20 à 80 parties (poids) de pneus PL et pour 80 à 20 parties de pneus VL. Plus précisément des mélanges 40 à 60 p/60 à 40 p conviennent spécialement bien.

L'élastomère synthétique utilisé comme additif, en petite quantité, dans les compositions de l'invention peut être choisi parmi les polymères ou copolymères à insaturation éthylénique déjà préconisés depuis longtemps pour l'incorporation aux bitumes vulcanisés au soufre destinés aux enrobés routiers ou produits analogues. Par exemple, on peut citer, à titre non limitatif des polyisoprènes, polychloroprènes, polybutadiènes, des copolymères éthylène-propylène, éthylène-acétate de vinyle, butadiène-styrène, des terpolymères éthylène-propylène- autre diène copolymèrisable, styrène-butadiène-styrène, styrène-isoprène-styrène..etc. Par exemple, des copolymères séquencés styrène-butadiène-styrène conviennent bien mais peuvent être substitués par d'autres produits équivalents tels que ceux choisis dans la liste précitée.

On notera que les bitumes traités selon l'invention sont des bitumes classiques, et non oxydés ou semi-soufflés, c'est-à-dire ceux obtenus par distillation directe, atmosphérique ou sous vide, de pétrole brut et dont les indices de pénétration sont généralement compris entre 60 et 150, comme par exemple des bitumes courants du type 80/100.

L'huile lourde pétrolière utilisée comme adjuvant hydrocarboné comprend, comme dit-ci-dessus, une coupe naphténo-aromatique riche en composés aromatiques, par exemple renfermant 50 à 75 % de tels composés, et présentant un point éclair supérieur à 200°C ainsi que des viscosités cinématiques supérieures à 500 centistokes à 40°C et à 20 centistokes à 100°C. Parmi ces types d'huiles connues en soi, on peut citer à titre d'exemple l'huile commercialisée, par la firme ESSO sous le nom de FLEXON 110 (marque déposée) ou l'un quelconque des produits équivalents disponibles dans le commerce.

Pour obtenir la composition de liant selon l'invention, on opère selon la technique connue, comme par exemple celle décrite dans la demande de brevet français précité, consistant à mélanger les quatre constituants a, b, c, d précités dans un malaxeur pour homogénéisation puis à introduite le mélange dans un fondoir où il est maintenu sous agitation à température comprise entre 170 et 250°C pendant des temps variant de 40 à 140 minutes.

La réaction de solvatation, ou phase de gonflement, entre le bitume et le caoutchouc en présence de l'huile lourde s'accompagne d'une forte augmentation de viscosité du mélange, par exemple jusqu'à 2000 centipoises ou plus, puis la viscosité redescend pour se stabiliser autour de 1000 à 1200 centipoises. Il a été constaté que, lorsqu'on met en oeuvre selon la technique connue les trois constituants a), c), et d), le taux de ci-saillement provoqué par l'énergie mécanique du malaxeur est relativement limité du fait notamment de l'encombrement stérique des macromolécules des constituants coutchouteux. Il apparait ainsi un seuil de rendement qu'il est pratiquement impossible de dépasser et qui limite la quantité de poudrette de caoutchouc à incorporer dans le mélange. Par exemple, avec 12 % en poids de poudrette dans le mélange, l'allongement du liant est faible alors qu'aux taux de 16 % on obtient un liant de bonnes caractéristiques mais ces dernières ne sont pas pratiquement modifiées au-delà de cette proportion de 16 %.

Il a été trouvé,de façon surprenante, qu'en incorporant selon l'invention, une petite quantité d'élastomère synthétique de haut poids moléculaire, on parvenait à un taux de cisaillement nettement supérieur et donc à un rendement sensiblement amélioré de la réaction de gonflement et de solvatation, ceci sans destruction de l'élastomère. On peut donc estimer que ce dernier agit comme un véritable catalyseur de digestion de la poudre de caoutchouc dans le bitume.

Grâce à l'introduction de cet adjuvant élastomère, les compositions selon l'invention présentant des indices de pénétrabilité (selon la norme du Laboratoire Central des Ponts et Chaussées France) améliorés ainsi qu'un fort accroissement de la résilience. En outre, les effets de la relaxation sont importants et les essais d'adhésivité montrent une remarquable constance ou invariabilité jusqu'à de très basses températures, de l'ordre de - 40° C.

Ces excellents résultats sont mis en évidence dans les tableaux dresséssi-après, suite aux séries d'expérimentations et où l'on peut voir:

Tableau 1: trois exemples comparatifs de compositions de bitume/poudre de caoutchouc où l'un dénommé FEO illustre un mélange connu alors que les autres montrent des réalisations selon l'invention avec 0,5 parties en poids ou % d'élastomère, dénommé "catalyseur de digestion" (FE 0,5) ou encore 1 partie (% poids) de cet élastomère (FE 1).

L'agent compatibilisant utilisé était l'huile précitée "Flexon 110".

On peut voir les nettes améliorations: des points de ramollissement bille et anneau, de la résilience ainsi que l'indice de pénétrabilité pour les compositions selon l'invention;

Tableau 2: l'établissement des courbes illustrant le maintien de la viscosité à une valeur nettement plus élevée pour les deux séries d'essais conformes à l'invention; ceci pour une température de mélange d'environ 200° C.

Tableau 3: les courbes comparatives d'essais de contrainte, en mé...-Newton par m$^2$, à une température expérimentale de - 10° C;

Tableau 4: les résultats d'essais de relaxation après des contraintes exercées en Newton/m$^2$ et montrant la tenue avantageuse des 2 compositions selon l'invention par rapport à l'essai témoin (FE 0) exempt d'addition d'élastomère;

Tableau 5: les résultats, sous forme de courbes d'essais d'adhésion globale à la plaque "vialit" selon le mode opératoire préconisé par le Laboratoire Central des Ponts et Chaussées (France) de mars 1973 où l'on compte les gravillons restés en place après avoir suivi un nombre déterminé de chocs.

On notera la remarquable invariabilité de l'adhésivité pour les deux compositions conformes à l'invention.

Les compositions perfectionnées selon l'invention se prêtent à de nombreuses applications telles que notamment: la fabrication d'enrobés, d'enduits superficiels pour revêtements de chaussées, la réalisation de couches d'étanchéité, de produits de colmatage de fissures, de joints de chaussées en béton... etc.

**Tableau 1**

|  | FE 0 | FE 0,5 | FE 1 |
|---|---|---|---|
| BITUME 80/100 | 81 % | 81 % | 81 % |
| Agent compatibilisant | 3 % | 3 % | 3 % |
| Poudrette de caoutchouc | 16 % | 15,5 % | 15 % |
| Catalyseur de "digestion" | 0 | 0,5 % | 1 % |
| Point de ramollissement bille et anneau NFT 66008 en °C | 61,5 | 68 | 75 |
| Pénétrabilité à 25°C en 1/10 mm NFT 66004 | 64 | 61 | 59 |
| Viscosité dynamique à 200° en cp | 1000 | 1100 | 1400 |
|  | *2 h 10 | 2 h 30 | 2 h 00 |
| % Résilience | 23 | 35 | 38 |
| Indice de pénétrabilité (LCPC) | + 1,8 | + 3,2 | + 4,2 |

* temps de réaction

**Tableau 2**

4

**Tableau 3**

Contrainte MN/m²

Essais de traction 10 mm/mn

- 10°C

FE 1

FE 0,5

FE 0

Allongement en %

5

**Tableau 4**

Contrainte N/m²

Essais de relaxation à 20°C
(après allongement de 100 % à 100 mm/mn)

FE 1

FE 0,5

FE 0

Temps en secondes

**Tableau 5**

# ESSAI D'ADHESIVITE A LA PLAQUE VIALIT

Matériaux 10/14 concassés porphyres Lessines

% de gravillons resés en place

Température

liant FE 0,5 gravillons — 100°C 20°C

liant FE 0 a gravillons — 100°C 20°C

**Revendications**

1. Composition pour revêtement, à base de bitume et de poudre de caoutchouc, constituée par la combinaison, pour 100 parties en poids, de:

a) 10 à 40 parties de poudre de caoutchouc issu de pneumatiques usagés de granulométrie 0,1 à 3 mm, la poudre comprenant elle-même pour 100 parties (poids): 20 à 80 parties de déchets broyés de pneumatiques de poids lourds et 80 à 20 parties de déchets broyés de pneumatiques de voiture de tourisme et/ou cyclomoteurs;

b) 0,5 à 3 parties d'un élastomère synthétique à insaturation oléfinique compatible avec le bitume décrit ci-dessous;

c) 3 à 15 parties d'adjuvant hydrocarboné constitué par une coupe pétrolière naphténo-aromatique renfermant plus de 50 % de composés aromatiques de point éclair supérieur à 200°C et de viscosité cinématique à 40°C supérieure à 500 centistokes;

d) Le complément à 100 parties de bitume classique, non traité, de distillation directe, d'indice de pénétration compris entre 60 et 150.

2. Composition selon la revendication 1, caractérisée en ce que l'élastomère synthétique est choisi dans le groupe constitué par des polyisoprènes, polychloroprènes, polybutadiènes, des copolymères éthylène-propylène, éthylène-acétate de vinyle, butadiène-styrène, des terpolymères éthylène-propylène-diène, styrène-butadiène-styrène, styrène-isoprène-styrène et autres polymères séquencés ou non.

3. Application de la composition selon l'une quelconque des revendications 1 à 2 à : la fabrication d'enrobés et d'enduits superficiels pour revêtements de chaussées, la réalisation de couches d'etanchéité, de produits de colmatage de fissures, de joints de chaussées en béton.

**Patentansprüche**

1. Belagszusammensetzung auf der Basis von Bitumen und Gummipulver bestehend aus der auf 100 Gewichtsteile bezogenen Kombination von:

a) 10 bis 40 Teilen aus Gebrauchtreifen stammendem Gummipulver der Korngrößenverteilung 0,1 bis 3 mm, das selbst wieder, bezogen auf 100 (Gewichts-)Teile enthält: 20 bis 80 Teile zerkleinerte Abfall-Schwergewichtsreifen und 80 bis 20 Teile zerkleinerte Abfallreifen von Personenwagen und/oder Krafträdern;

b) 0,5 bis 3 Teilen eines synthetischen Elastomeren mit olefinischer Ungesättigtheit, das mit dem oben genannten Bitumen kompatibel ist;

c) 3 bis 15 Teilen Kohlenwasserstoff-Hilfsmittel, bestehend aus einem naphtheno-aromatischen Rohölschnitt, der mehr als 50 % aromatische Verbindungen enthält und einen Flammpunkt oberhalb von 200°C sowie eine kinematische Viskosität bei 40°C von über 500 Centistokes hat;

d) Rest auf 100 Teile klassisches, nicht behandeltes Bitumen aus direkter Destillation mit einem Penetrationsindex zwischen 60 und 150.

2. Zusammensetzung nach Anspruch 1,
dadurch gekennzeichnet,
daß das synthetische Elastomer ausgewählt ist aus der Gruppe bestehend aus: Polyisoprenen, Polychloroprenen, Polybutadienen, den Copolymeren von Ethylen-Propylen, Ethylen-Vinylacetat, Butadien-Styrol, Styrol-Isopren-Styrol und anderen gegebenenfalls sequenzierten Polymeren.

3. Verwendung der Zusammensetzung nach irgendeinem der Ansprüche 1 bis 2 für: die Herstellung von Oberflächenbeschichtungen und -überzügen für Straßenbeläge, die Gewinnung von Isolierschichten, Spachtelmassen für Risse, Fugen von Betonfahrbahnen.

**Claims**

1. A covering composition based on a mixture of bitumen and powder rubber comprising the combination, per 100 parts by weight, of

a) 10 to 40 parts of scrap rubber issued of used pneumatic tyres with a grain size of 0,1 to 3 mm, the scrap powder comprising itself for 100 parts by weight: 20 to 80 parts of ground heavy-duty tyre scraps and 80 to 20 parts of ground scraps selected from the group consisting of passenger-car tyres and motor cycle tyres;

b) 0,5 to 3 parts of a synthetic elastomer having olefinic insaturation which is compatible with the bitumen;

c) 3 to 15 parts of hydrocarbon adjuvant consisting of a naphteno-aromatic petroleum fraction containing more than 50 % aromatic compounds, with a flash point above 200°C and a kinematic viscosity at 40°C greater than 500 centistokes;

d) a quantity sufficient to 100 parts of standard, unprocessed, straight-run bitumen having a penetration index between 60 and 150;

2. Composition according the claim 1, wherein the synthetic elastomer is selected from the group consisting of polyisoprenes, polychloroprenes, polybutadienes, ethylene-propylene copolymers, ethylene-vinylacetate copolymers, butadiene-styrene copolymers, ethylene-propylene-diene terpolymers, styrene-butadiene-styrene terpolymers, styrene-isoprene-styrene terpolymers and other sequenced or not polymers.

3. Use of the composition according the claims 1 or 2 for manufacture of surfacings and surface coatings for road pavings, the making of fluid-tight layers, products for sealing cracks, joints of concrete roads.